# EUROPEAN PATENT SPECIFICATION

(11) **EP 2 300 717 B1**
(45) Date of publication and mention of the grant of the patent: **01.06.2016**
(21) Application number: 09730161.8
(22) Date of filing: 08.04.2009
(51) Int. Cl.: F04D 13/08, F04D 29/08, F04D 29/42, F16J 13/12, F16L 55/132, H02K 5/132, F04D 13/10, F04D 29/62

(54) **CENTRIFUGAL ELECTRIC PUMP**
ELEKTRISCHE KREISELPUMPE
POMPE ÉLECTRIQUE CENTRIFUGE

(30) Priority: 09.04.2008 IT BO20080219
(43) Date of publication of application: 30.03.2011
(73) Proprietor: Pedrollo S.p.a., 37047 San Bonifacio (Verona) (IT)
(72) Inventor: PEDROLLO, Silvano, I-37047 San Bonifacio (VR) (IT)
(74) Representative: Manzella & Associati
(86) International application number: PCT/IB2009/051491
(87) International publication number: WO 2009/125363

(56) References cited:
- AU-A- 5 187 564
- BE-A- 700 173
- GB-A- 2 008 710
- US-A- 2 238 257
- US-A- 4 015 633
- US-A- 4 303 101
- US-A1- 2004 018 094

## Description

### Technical Field

The present invention relates to a centrifugal electric pump, in particular of the submerged type.

### Background Art

It is known that in order to transfer a liquid from a reservoir to a usage station arranged at higher height generally used are pumping members, such as in particular submerged pumps. Known submerged pumps are generally provided with an external tubular casing provided with a plurality of radial openings for liquid inlet, normally referred to as suctioning openings, and with an outlet opening, referred to as discharge opening. Accommodated inside the casing are the pump operating members, made up of a pumping unit and a motor unit generally of the electrical type, suited to actuate the liquid transfer from the suctioning openings to the discharge opening.

The pumping unit is usually made up of one or more stages, each of which comprising a rotating or rotor member, suited to be rotated by the motor unit shaft, and by stationary members suited to channel the liquid from one stage to another, up to the discharge opening.

Patent US 7,290,984 for example illustrates a centrifugal pump with multiple stages, in which each stage is made up of a rotor unit, a disc unit and a distributor unit, arranged around a motor shaft. The hub of the rotor is provided with floating sealing means, supported by the diffuser unit, suited to reduce the liquid recirculation. A thrust ring is provided for arranged around the motor shaft and suited to engage the hub of the rotor and the abovementioned rotor hub sealing means. Lastly a friction coupling ring is provided for fixed against the disc unit and suited to engage a corresponding surface of the rotor.

A problematic aspect of the electric pumps of the known type, and in particular of the submerged pumps, regards protecting the electric motor and the electric connections against the liquid transferred from the pumping member. For such purpose, usually defined in the electric pumps of the prior art, inside the casing, is a special motor chamber suited to be separated, by means of mechanical sealing means, both from the liquid present outside the casing, and from the liquid that passes through the pumping member.

Correlated to such problem is the need, especially common for the submerged electric pumps, to check the operating members present inside the external tubular casing. As a matter of fact, this type of electric pumps is soften used to operate on liquids that, though filtered, still contain dirt particles. In order to prevent the mechanical components from being worn by the presence of such particles, it is necessary to check and cyclically clean the mechanical parts at contact with the liquid. However, in the electric pumps of the known art it is difficult to combine the need for a perfect connection of the electric motor with the need to easily disassemble and reassemble the parts forming the casing to perform the maintenance operations of the electric pumps.

In an attempt to solve the abovementioned problems, different types of devices for fastening and connecting the parts making up the electric pumps have been proposed. For example, patent US 4,523,899 illustrates a submerged electric pump of the multistage type provided with special sealing connection means for electrical connections to the motor unit.

Patent EP0774584 in turn illustrates a different type of sealing connection means intended to be used in electric pumps of the submerged type. In particular, provided for is a device for mounting and for connecting the parts forming a pumping unit. Such pumping unit provides for two connection units with screws arranged peripherally and in an alternating manner. The first connection unit connects - by means of a sealing ring - a first shell suited to hold the stator member of the motor unit and a second shell suited to hold the lubricating fluid. The second connection unit connects such sealing ring, a third shell of the pumping member, and an external cooling casing that surrounds the shell of the stator member.
Patent US 4,015,633 discloses an assembly for sealing a submersible device, in particular a submersible pump, comprising a casing in which a pumping unit and a motor unit are axially inserted. The motor unit is insulated by means of an elastic diaphragm maintained in sealing engagement with an end of the internal wall of the casing. Such diaphragm is associated with a device predisposed to retain the diaphragm against the mentioned inner wall.

However, the proposed solutions do not allow to satisfactorily overcome the above-mentioned drawbacks, in that they comprise expensive and complex fixing devices, that require long and complicated mounting and dismounting operations. In particular, such problems are more significant in the case of the electric pumps of relatively small dimensions, with diameters of the motor member comprised for example between 2 and 10 inches, for which it is more difficult to provide fixing solutions that facilitate the partial dismounting of the different operating parts.

### Disclosure of Invention

The aim of the present invention is that of overcoming the abovementioned drawbacks, by providing a centrifugal electric pump capable of ensuring a reliable protection of the motor members against the surrounding liquid.

Within such aim, a further object of the present invention is that of providing a centrifugal electric pump that can be mounted and dismounted in an easy and quick manner, in particular in the case of electric pumps of relatively small dimensions.

Another object of the invention is that of providing a centrifugal electric pump that is easy to make, versatile to use and safe, as well as relatively inexpensive.

The abovementioned objects are attained, according to the present invention, by the centrifugal electric pump according to claim 1.

### Description of Drawings

The details of the invention shall be more apparent from the detailed description of a preferred embodiment of the centrifugal electric pump, illustrated for indicative purposes in the attached drawings, wherein:

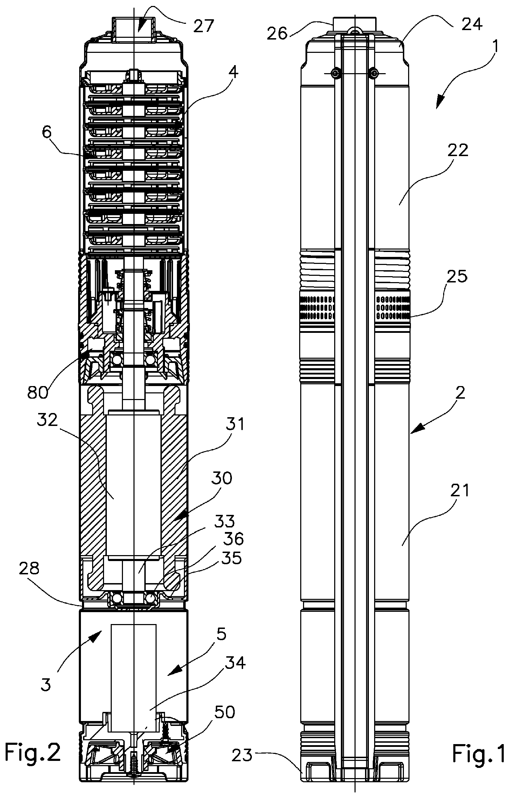

figure 1 shows a front view of the centrifugal electric pump according to the present invention;
figure 2 shows a sectional view according to an axial plane of the same electric pump;
figure 3 shows an enlarged sectional view of an end portion of the electric pump subject of the invention;
figure 4 shows an enlarged sectional view, according to a different axial plane, of the same end portion of figure 3;
figure 5 shows an axial sectional view of a median portion of the electric pump, at the connection to the operating members;
figure 6 shows an axial sectional view of the abovementioned end portion of the electric pump according to a different embodiment;
figures 7, 8, 9 and 10 show a perspective view of the steps for mounting a portion of the electric pump subject of the invention.

### Best Mode

With special reference to such figures, the centrifugal electric pump, of the submerged type, according to the present invention is indicated in its entirety with 1. The electric pump 1 comprises a tubular-shaped external casing 2, for example cylindrical, preferably made of metal sheet of suitable thickness. The casing 2 is suited to accommodate the pump operating members, in particular a motor unit 3 and a pumping unit 4, per se known. The casing 2 preferably comprises a first tubular portion 21 suited to internally define a first compartment or chamber 5 for accommodating the motor unit 3, and a second tubular portion 22, arranged - during use - coaxial to the first tubular portion 21, suited to internally define a second compartment or chamber 6 for accommodating the pumping unit 4. The casing 2 is closed at the opposite ends by a first cover 23 and a second cover 24.

The second tubular portion 22 of the casing 2 bears, in proximity to the end for coupling to the first tubular portion 21, a plurality of openings 25 for suctioning the liquid, preferably distributed radially in a regular manner and arranged adjacent on different circumferences.

The second cover 24 axially configures a tubular projection 26 suited to internally define a discharge pipe 27 for the liquid supplied by the pumping member 4 through the inlet openings 25.

The motor unit 3 comprises an electric motor 30 made up of a stator 31 and a rotor 32 keyed on a motor shaft 33 intended to be operatingly connected to the pumping unit 4. Should the electric motor 30 be of the single-phase type, provided for is a capacitor member 34 accommodated inside the first chamber 5 in proximity to the closed end of the first cover 23. More precisely, the motor member 30 is electrically connected to the capacitor member 34 and to a power supply unit, not represented, arranged outside the electric pump 1. The electrical connection with such power supply unit occurs by means of electrical cables passing through the first cover 23.

Furthermore, the first tubular portion 21 has an annular narrowing 28 suited to serve as an abutment, inside the first chamber 5, for the positioning of the stator 31. At such narrowing 28, the end of the motor 30 is held by a cap 35 which supports the end of the shaft 33 by interposing suitable rolling members 36.

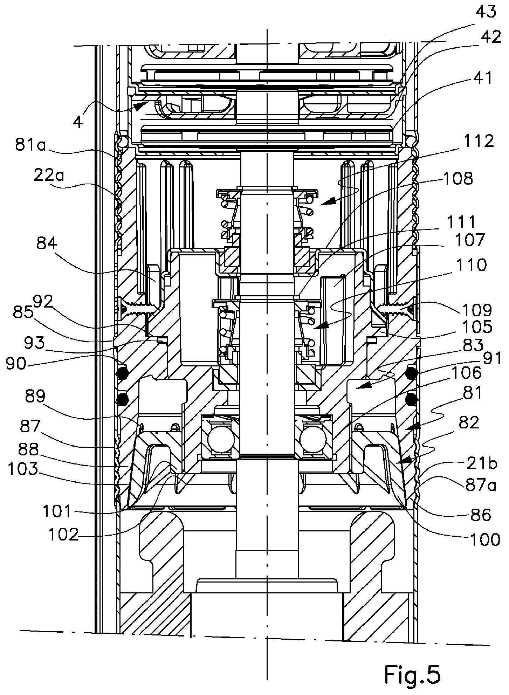

At the opposite end, the motor shaft 33 is extended in the second chamber 6, accommodated in which is the pumping unit 4 which, in the illustrated case, is of the multistage type. More precisely, each stage is formed by a rotor member 41, constrained integral to the motor member 33, by a diffuser member 42 and by a disc 43, unconstrained from the motor shaft 33, to convey the liquid to the subsequent stage or, in this case, towards the discharge pipe 27 (see fig. 5).

According to the present invention, the electric pump 1 comprises first closure means 50 and second closure means 80 arranged at the opposite ends of the first tubular portion 21 of the casing 2 to protect the motor unit 3 accommodated in the first chamber 5 against the liquid suctioned by the pumping member 4, as well as against the liquid present outside the casing 2.

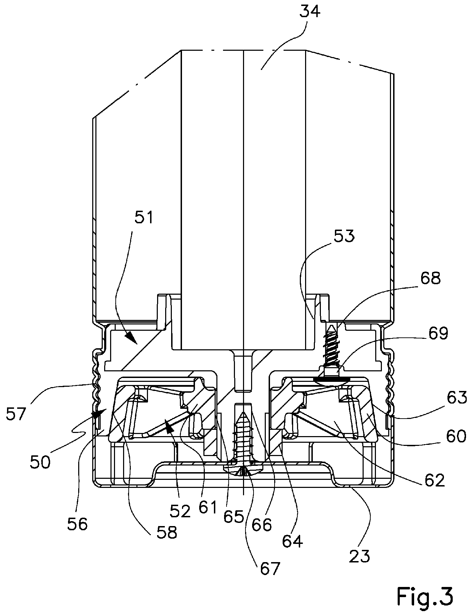

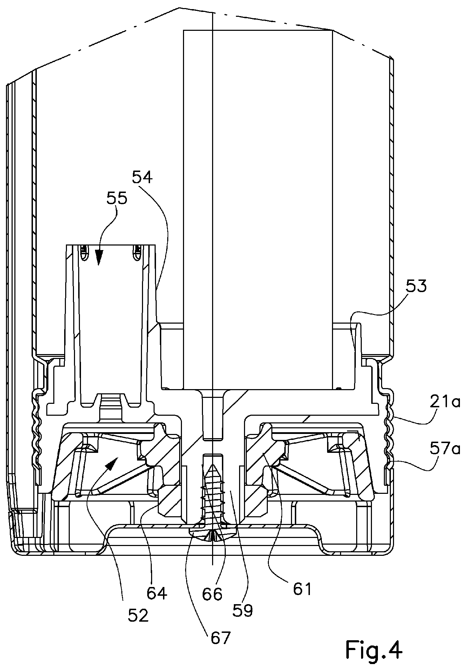

The first closure means 50 is substantially formed by an occlusion member 51 that is suited to be elastically fastened against the internal wall of the first tubular portion 21 by means of a fastening member 52 (see figures 3 and 4). The occlusion member 51 is attained plug-like by a body configuring, on the side facing the chamber 5, a seat 53 for accommodating the capacitor member 34. On the same side, the body of the occlusion member 51 configures a tube 54 which defines an electrical cabling passage pipe 55 for connecting to the motor unit 3. The electrical cabling passing through the pipe 55 is intended to be connected to the external power supply unit. During use, the pipe 55 is suitably resin coated in such a manner to prevent entry of liquid from the external.

The body of the occlusion member 51 peripherally bears an annular ring 56 intended to be elastically fastened against the internal surface of the first tubular portion 21 of the casing 2 by means of the abovementioned fastening member 52. The annular ring 56 is made of elastic material, for example rubber or any other suitable elastomer material, preferably as a separate part over-moulded on the entire external surface of the body of the occlusion member 51. The body of the occlusion member 51 is instead preferably made of plastic material of different type, provided with greater rigidity.

In particular, the annular ring 56 has a first operating side 57, arranged - during use - adjacent to the internal surface of the casing 2, and an opposite second operating side 58, suited to be engaged by the fastening member 52. The second operating side 58 defines a substantially frusto-conical abutment surface, in such a manner that the transverse section of the annular ring 56 is increasing from the unconstrained end inwards. At the zone for coupling with the occlusion member 51, the casing 2 has a circumferential crease 21a intended to be engaged by a corresponding grooving 57a made on the first operating side 57 of the annular ring 56.

The body of the occlusion member 51 shapes a threaded axial appendage 59 suited to be coupled to the fastening member 52. At the free end, the appendage 59 is provided with an axial hole 66 for fixing, by means of a special screw 67, the first cover 23.

The occlusion member 51 further provides for an access hole 68 closed, during use, by screw means 69, for example of the self-threading type. The access hole 68 allows, before using the motor member 30, to perform sealing tests on the chamber 5.

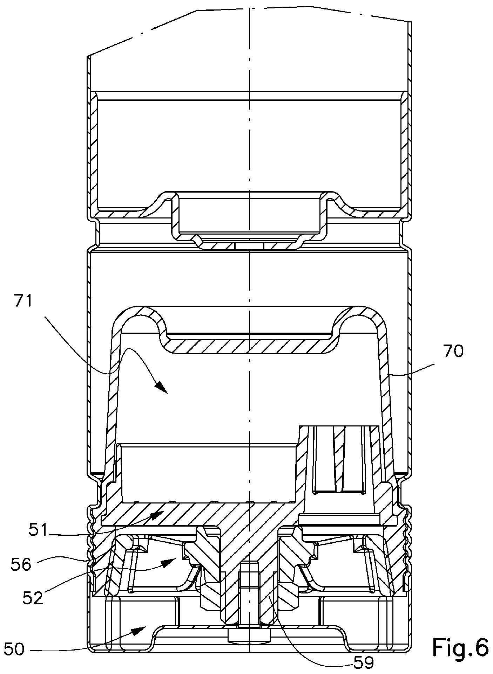

According to a different embodiment, illustrated in figure 6, intended in particular to be used for protecting the electric motor members in oil bath, in driving apparatus, the occlusion member 51 also provides for a flexible shell 70 applied in form of a hood on the side facing the same motor members. The flexible shell 70 is suitably made integral with the annular ring 56, in such a manner to be projecting inwards the chamber 5. The flexible shell 70 internally defines a compensation chamber 71 suited to receive liquid from outside the motor member to provide static equilibrium between the oil present inside and the liquid outside the chamber 5.

The fastening member 52 is made up of an annular portion 60 connected to a central portion 61 by means of a series of radial ribs 62. The annular portion 60 is frusto-conical-shaped in such a manner to externally define an operative surface 63 substantially joined to the surface defined by the second operating side 58 of the annular ring 56 of the occlusion member 51. The central portion 61 has an axial hole 65 suited to receive - passing through - the threaded appendage 59 of the occlusion member 51. During use, the central portion 61 of the fastening member 52 is suited to be fastened by means of a fastening nut 64, in such a manner to compress the operative surface 63 of the annular portion 60 against the second operating side 58 of the annular ring 56. It should be observed that following such compression the annular ring 56 expands elastically in radial direction with respect to the axis of the casing 2, being arranged in a sealing manner close to the internal wall of the same casing 2.

The second closure means 80 is in turn made up of an occlusion member 81 that is suited to be elastically fastened against the internal wall of the casing 2 by means of a fastening member 82 (see figure 5). The occlusion member 81 and the fastening member 82 are associated, as clarified hereinafter, with a manoeuvre member 83.

The occlusion member 81 is attained ring-like by a tubular-shaped body, suitably made of plastic material, suited to be coaxially inserted into the casing 2, close to the internal wall of the first tubular portion 21. At the end facing the chamber 5 during use, the occlusion member 81 configures an annular section 86 having a first external operating side 87 and a second internal operating side 88 frusto-conical-shaped, suited to be engaged by the fastening member 82, to obtain a sealing on the internal wall of the casing 2. The annular section 86 has a series of longitudinal notches 89, distributed angularly, suited to partition the same annular section 86 into a series of sections; the notches 89 are suited to be engaged by corresponding fins 104 of the fastening member 82. On the external side 87, the annular section 86 is provided with a circumferential crease 87a intended to engage a joint crease 21b obtained on the wall of the casing 2.

At the opposite end, the occlusion member 81 is suited to be partially inserted into the second tubular portion 22 of the casing 2. At such portion, the occlusion member 81 has a series of slots 84, distributed angularly, to allow the passage of the liquid from outside the electric pump to the second chamber 6, through the openings 25 of the second tubular portion 22 of the casing 2.

At the abovementioned end, the occlusion member 81 has a further crease 81a suited to engage a further joint crease 22a of the second tubular portion 22 of the casing 2.

Externally, in a substantially median position, the occlusion member 81 has an annular protrusion 85 intended to serve as a stop element for the axial positioning. Conveniently provided between such annular protrusion 85 and the section 86, are a pair of annular throats 90 for accommodating respective sealing rings 91.

Furthermore, in a substantially median position, the occlusion member 81 internally has an annular shoulder 92, suited to serve as an abutment for accommodating the manoeuvre member 83, as well as a seat for accommodating a sealing ring 93.

The fastening member 82 is made up of an annular portion 100 connected to a central portion 101 by means of a series of radial ribs 102. The annular portion 100 is frusto-conical-shaped in such a manner to externally define an operative surface 103 substantially joined to the surface defined by the second operating side 88 of the annular section 86 of the occlusion member 81.

The central portion 101 is made up of an internally threaded sleeve for coupling to the manoeuvre member 83. The manoeuvre member 83 is made up of a substantially tubular-shaped body, substantially made of high heat conductivity metal material, for example brass. At a substantially median position, the manoeuvre member 83 externally shapes a collar 105 suited to abut against the annular shoulder 92 of the occlusion member 81.

At an end, the manoeuvre member 83 is suited to be accommodated inside the first chamber 5 of the casing 2. At the opposite end, alongside the collar 105, the manoeuvre member 83 is suited to be accommodated inside the second chamber 6. The end of the manoeuvre member 83 facing inwards the chamber 5 - during use - is made up of a threaded head 106 suited to be coupled to the threaded sleeve 101 of the fastening member 82.

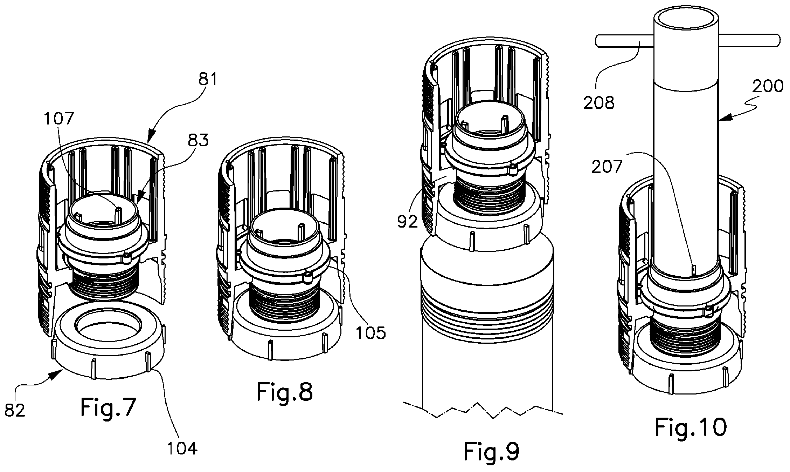

The opposite end of the manoeuvre member 83 internally configures a series of manoeuvre ribs 107 distributed angularly around the axis of the member 83 itself, intended to allow the mounting and dismounting of the second sealing means 80. More precisely, the manoeuvre ribs 107 are suited to be engaged by a manoeuvre tool 200 at the respective grooves 207, to allow, by means of the axial rotation of the member 83, coupling against the fastening element 82, or on the contrary, the dismounting thereof (see figure 10).

The same end of the manoeuvre member 83 is closed, during use, by a covering cap 108 which has a central opening for the passage of the motor shaft 33 and it is fixed by means of a plurality of screws 109 arranged transversely, for example self-threading, angularly distributed around the axis of the member 83. More precisely, the screws 109 are inserted passing, during use, through the wall of the occlusion member 81, in such a manner to compress - by means of the respective end - the cap 108 against the external wall of the manoeuvre member 83.

In addition, the cap 108, which internally defines a chamber for the lubricating fluid, has an access hole, not shown in the drawing, for performing, before set-up, possible sealing tests on the chamber itself. Such access hole is closed, during use, by suitable screw means.

The operation of the centrifugal electric pump according to the invention is described hereinafter.

The motor unit 3 is inserted into the first chamber 5 defined by the first tubular portion 21 of the casing 2, moving the electric motor 30 to abut against the annular narrowing 28. Electrical cables for connecting to the external power supply unit, through the passage pipe 55 on the head of the body of the occlusion member 51 are subsequently inserted. In order to ensure perfect sealing, the passage is subsequently resin coated.

The first closure means 50 is then mounted, by inserting the related occlusion member 51 into the casing 2. In the mounting configuration, the annular ring 56 of the occlusion member 51, made of elastic material, adheres against the internal wall of the casing 2. Then, the fastening member 52 which sealingly fastens the annular ring 56 against the internal wall of the casing 2 is inserted. The central perforated portion 61 of the fastening member 52 is fitted onto the threaded appendage 59 of the occlusion member 51, moving the annular portion 60 of the same occlusion member 51 to abut against the annular ring 56. The screwing of the fixing nut 64 onto the threaded appendage 59 of the body of the fastening member 52 determines the progressive compression of the operative surface 63 of the annular portion 60 against the second operating side 58 of the annular ring 56, due to the frusto-conical configuration of the same annular portion 60 and of the internal surface of the annular portion 60. Following such compression, the annular ring 56 expands elastically in radial direction with respect to the axis of the casing 2, obtaining a circumferential sealing action, as well as a fixing action, against the internal wall of the casing 2.

The accommodation compartment of the motor unit 3 is thus closed, on the opposite side by means of the second closure means 80. Preferably, the unit made up of the occlusion member 81, the fastening member 82 and the manoeuvre member 83 is pre-mounted separately and then introduced into the casing 2. For such purpose, the manoeuvre member 83 is first inserted coaxially into the occlusion member 81 (figure 7), until the collar 105 of the manoeuvre member 83 attains an abutment of the annular shoulder 92 of the occlusion member 81. The fastening member 82 is axially prearranged on the opposite end of the occlusion member 81, in such a manner to insert the fins 104 into the grooves 89 of the occlusion member 81.

At this point, the manoeuvre member 83 is rotated to perform the tightening of the fastening member 82 (figure 8). A first step of rotating the manoeuvre member 83 determines the engagement of the threaded head 106 into the first threads of the threaded sleeve 101. It is important to observe that the rotation of the manoeuvre member 83 does not rotate the sleeve 101 of the fastening member 82, given that it is held by the fins 104 inserted into the notches 89 of the occlusion member 81. Such movement solely determines an axial movement of the fastening member 82.

The pre-mounted unit is inserted around the motor shaft 33 in the first tubular portion 21 through the open end of the casing 2 (figure 9). The unit is correctly inserted when the annular protrusion 85 attains contact with the end edge of the first tubular portion 21. To complete the sealed-fastening of the unit, the manoeuvre member 83 is further rotated (figure 10). The rotation of the manoeuvre member 83 is conveniently performed by means of the manoeuvre tool 200. In practice, the notches 207 of the tool 200 are inserted into the manoeuvre ribs 107, thus allowing rotation thereof integral with the manoeuvre member 83 by means of a special control grip 208.

Such rotation, as mentioned, determines the axial movement of the fastening member 82. Due to the frusto-conical configuration of the operative surface 103 of the annular portion 100 , the annular section 86 is compressed and expanded elastically in radial direction against the internal wall of the first tubular portion 21, thus obtaining the desired fixing.

Inserted onto the motor shaft 33 is a first mechanical sealing unit 110 of the per se known type, held in position against a respective stop ring 111 prearranged abutting against a suitable shoulder of the shaft 33.

Inserted above the first mechanical sealing unit 110, around the shaft 33, is the covering cap 108, to close the head of the manoeuvre member 83 and occlusion member 81. The cap 108 is fixed by means of transverse screws 109.

A second mechanical sealing unit 112 is prearranged on the motor shaft 33 above the cap 108 similarly to the first mechanical sealing unit 110. The second mechanical sealing unit 112 cooperates with the first mechanical sealing unit 110 to ensure the separation of the lubricating fluid chamber, defined internally by the cap 108, from the first chamber 5, on one side, and from the second chamber 6, on the other.

Lastly, the pumping unit 4 is mounted on the motor shaft 33 in a known manner. The second tubular portion 22 is inserted in abutment against the stop element 85 of the occlusion member 81. Lastly, the second cover 24 is superimposed to complete the mounting operations.

Upon completing mounting, the accommodation compartment of the motor unit is perfectly insulated against the liquid supplied by the pumping unit and the liquid present outside the casing, due to the action of the closure means 50, 80.

The centrifugal electric pump according to the invention thus attains the object of ensuring a reliable protection of the motor member against the surrounding liquid.

In particular, such result is attained due to the radial expansion of the respective elastic material portion 56, 86 of the occlusion member 51, 81 of the closure means 50, 80 performed by means of the fastening member 52, 82. Such expansion safely determines the fastening of the abovementioned elastic material portion 56, 86 of the occlusion member 51, 81 onto the internal wall of the casing 2.

It is important to observe that, in case of closure means 50, the radial expansion of the annular ring 56 also attains the sealed closure of the first chamber 5. This result is due to the continuous tubular configuration of the annular ring 56, capable of internally engaging a corresponding portion of the internal wall of the casing 2.

On the contrary, in case of the second closure means 80, the sealing is mainly attained by means of the first and second mechanical sealing means 110, 112 and by means of the sealing rings 91, 93 respectively.

A distinctive characteristic consists in the fact that fastening is ensured under all conditions and degree of accuracy of the mechanical components of the electric pump or driving apparatus comprising the closure means 50, 80 described. As a matter of fact the mentioned elastic expansion is efficient even in case the tubular casing 2 is not perfectly cylindrical, but is for example oval-shaped. Furthermore, it should be observed that the expansion fastening according to the invention allows making the casing 2, usually made of steel, with lower interference with respect to the closure mechanical parts. These can thus be mounted more easily.

A further object of the invention consists in the fact that the claimed expansion fastening is obtained using a small number of mechanical pieces, whose dimensional accuracy has a lower impact on the efficiency of the closure, which is ensured by the elastic behaviour of the elastic material portion 56, 86 of the occlusion member 51, 81.

Another advantage of the electric pump subject of the invention is that of being easy to mount and dismount. In particular, the dismounting of the second closure means 80 occurs by rotating the manoeuvre member 83, in the direction suited to move the fastening member 82 away from the annular section 86, hence determining the elastic return from the radial expansion condition, freeing the same annular section 86 from the internal wall of the casing 2.

A further advantage of the invention lies in the optimal discharge of the heat that develops between the parts in relative motion, mainly the mechanical sealings between the motor shaft 33 and the fixed parts. This is mainly due to the presence of the manoeuvre member 83 specifically made of heat conducting material, preferably brass. Such material ensures a rapid and efficient discharge of the generated heat, and allows performing an accurate coupling with the fastening member 82.

The closure means 50, 80 are safe and reliable against possible causes of screws loosening. In particular the first closure means 50 is firmly tightened by means of a nut 64, while the second closure means 80 is also tightened due to the transverse screws 109 which transversely lock the manoeuvre member 83.

In the practical implementation of the invention, the materials used, as well as the shape and dimensions, may vary depending on the requirements.

In cases where the technical characteristics mentioned in each claim are followed by reference signs, such reference signs were included strictly for enhancing the understanding of the claims and hence they have no restrictive value whatsoever on the object of the element identified for exemplifying purposes by such reference signs.

## Claims

1. Centrifugal electric pump of the type comprising
a tubular-shaped external casing (2) configuring at least one suctioning opening (25) and a discharge opening (27);
a pumping unit (4) axially inserted into said casing (2) to suction a liquid through said suctioning opening (25) and transfer said outflowing liquid through said discharge opening (27);
a motor unit (3) axially inserted into said casing (2) and suited to be operatively connected to said pumping unit (4);
closure means (50, 80) suited to insulate an accommodation compartment (5) of said motor unit (3) against the liquid supplied by said pumping unit (4) and the liquid present outside said casing (2); said closure means (50, 80) comprising
an occlusion member (51, 81) provided with at least one elastic material portion (56, 86) suited to circumferentially engage the internal surface of said casing (2); and
a fastening member (52, 82) suited to be associated with said occlusion member (51, 81) to perform the radial expansion of said elastic material portion (56, 86), in such a manner to fasten the same elastic material portion (56, 86) against said internal surface of said casing (2),
said elastic portion (56, 86) comprising an annular ring having a first operating side (57, 87), arranged - during use - adjacent to said internal surface of said casing (2), and an opposite second operating side (58, 88), suited to be engaged by said fastening member (52, 82),
**characterised in that**
said annular ring (56) is made of elastic material as a separate piece peripherally borne by the body of said occlusion member (51), and said body of said occlusion member (51) is made of plastic material of different type, provided with more rigidity with respect to said annular ring (56).

2. Electric pump according to claim 1, **characterised in that** said second operating side (58, 88) has a substantially frusto-conical abutment surface, in such a manner that the transverse section of said annular ring (56, 86) increases starting from the free end.

3. Electric pump according to claim 1 or 2, **characterised in that** said annular ring (56) is over-moulded on the entire external surface of the body of said occlusion member (51).

4. Electric pump according to claim 1 or 2, **characterised in that** said first operating side (57, 87) of said annular ring (56, 86) has a crease (57a, 87a) suited to engage, during use, a corresponding circumferential crease (21 a) of said internal surface of said casing (2).

5. Electric pump according to claim 1, **characterised in that** the body of said occlusion member (51) configures a tube (54) which defines a passage pipe (55) for the electrical cabling for connecting to said motor unit (3), said pipe (55) being suitably resin coated in such a manner to prevent entry of said liquid from outside into said compartment (5).

6. Electric pump according to claim 1, **characterised in that** said occlusion member (56) configures an axial threaded appendage (59) suited to be coupled to said fastening member (52).

7. Electric pump according to claim 1, **characterised in that** said occlusion member (56) provides for an access hole (68) closed, during use, by screw means (69) and suited to allow sealing tests inside said compartment (5).

8. Electric pump according to claim 1 or 2, **characterised in that** said occlusion member (56) provides for a flexible shell (70) applied as a hood on the side facing said motor member (30) and made integral with said annular ring (56), in such a manner to project inwards said compartment (5) and internally define a compensation chamber (71) suited to receive said liquid from outside to obtain the static equilibrium between a fluid present inside said compartment (5) and said liquid present outside.

9. Electric pump according to claim 1, **characterised in that** said annular ring (86) of the occlusion member (81) has a series of longitudinal notches (89), distributed angularly, suited to partition the same annular section (86) into a series of sectors, said notches (89) of said annular section (87) being suited to be engaged by respective longitudinal fins (104) of said fastening member (82).

10. Electric pump according to one or more of the preceding claims, **characterised in that** said occlusion member (81) externally has an annular protrusion (85) intended to serve as a stop element for the axial positioning and **in that** between said annular protrusion (85) and said annular section (86) there is at least one annular throat (90) for accommodating a respective sealing ring (91).

11. Electric pump according to claim 1, **characterised in that** said fastening member (52, 82) comprises a frusto-conical-shaped annular portion (60, 100) in such a manner to externally define an operative surface (63, 103) substantially joined to the surface defined by said second operating side (58, 88) of said annular ring (56, 86) of the occlusion member (51, 81).

12. Electric pump according to claim 11, **characterised in that** said fastening member (52, 82) comprises a central portion (61, 101) connected to said annular portion (60, 100) by means of a series of radial ribs (62, 102) and having an axial hole (65, 101) suited to receive - passing through - a threaded portion (59, 106) associated to said occlusion member (51, 82).

13. Electric pump according to claim 11, **characterised in that** said fastening member (52) is fastened, during use, against said occlusion member (51) by means of anti-unscrewing means (64) made up of a nut coupled to said threaded portion (59) of said occlusion member (51).

14. Electric pump according to claims 9 and 12, **characterised in that** it comprises a tubular-shaped manoeuvre member (83) associated, during use, with said occlusion member (81) and coupled to said threaded portion (106) of said central portion (101) by means of a threaded head (106), to allow, through axial rotation of the same manoeuvre member (83) and due to said engagement of said grooves (89) of the annular ring (86) into said fins (104) of the fastening member (82), an axial movement of said fastening member (82) such to generate said radial expansion of said annular ring (86) of the occlusion member (81) against said internal surface of said casing (2).

15. Electric pump according to claim 14, **characterised in that** at the end opposite to said threaded head (106), said manoeuvre member (83) configures a series of manoeuvre ribs (107) distributed angularly around the axis of the manoeuvre member (83) itself, intended to allow the mounting and dismounting of said sealing means (80).

16. Electric pump according to claim 14, **characterised in that** at a substantially median portion, said manoeuvre member (83) externally shapes a collar (105) suited to abut against an internal annular shoulder (92) of said occlusion member (81).

17. Electric pump according to claim 14, **characterised in that** said manoeuvre member (83) is made of high thermal conductivity metal material.

## Patentansprüche

1. Zentrifugalelektropumpe enthaltend:
eine schlauchförmige externe Buchse (2) mit wenigstens einer Ansaugöffnung (25) und
einer Ablassöffnung (27);
eine Pumpgruppe (4), die axial in die genannte Buchse (2) eingelassen ist, um durch die genannte Ansaugöffnung (25) eine Flüssigkeit anzusaugen und die genannte Flüssigkeit durch die genannte Ablassöffnung (27) abzulassen;
eine Motorgruppe (3), die axial in die genannte Buchse (2) eingelassen ist und operativ an genannte Pumpgruppe (4) angeschlossen werden kann;
Verschlussmittel (50, 80), die einen Aufnahmeraum (5) der genannten Motorgruppe (3) von der Flüssigkeit, die von genannter Pumpgruppe (4) geliefert wird, und von der Flüssigkeit, die sich außerhalb der genannten Buchse (2) befindet, isolieren können; die genannten Verschlussmittel (50, 80) beinhalten ein Einschlusselement (51, 81), das mindestens ein Teil (56, 86) elastischen Materials besitzt und das kreisförmig an der internen Oberfläche der genannten Buchse (2) haften kann; und ein Klemmelement (52, 82), das mit diesem Einschlusselement (51, 81) verbunden werden kann, um die Radialausdehnung des genannten Teils (56, 86) elastischen Materials so auszuführen, dass dasselbe Teil (56, 86) elastischen Materials gegen genannte interne Oberfläche der genannten Buchse (2) geklemmt wird,
das genannte elastische Teil (56, 86) umfasst einen Ringkranz, der eine erste Arbeitsseite (57, 87) besitzt, die in Betrieb angrenzend an die genannte interne Oberfläche der genannten Buchse (2), und entgegen zu einer zweiten Arbeitsseite (58, 88) von dem genannten Klemmelement (52, 82) eingesetzt werden kann,
**dadurch gekennzeichnet, dass**
der genannte Ringkranz (56) als separates Teil aus elastischem Material besteht, umfänglich vom Körper des genannten Einschlusselements (51) gefasst, und genannter Körper des genannten Einschlusselements (51) aus Kunststoffmaterial unterschiedlicher Art besteht, und größere Steifheit als genannter Ringkranz (56) besitzt.

2. Elektropumpe nach Anspruch 1, **dadurch gekennzeichnet, dass** dessen zweite Arbeitsseite (58,88) eine hauptsächlich stumpfkegelige Anschlagoberfläche aufweist, so dass sich der Querschnitt dieses Kranzes (56, 86) ab dem freien Ende vergrößert.

3. Elektropumpe nach Anspruch 1 oder 2, **dadurch gekennzeichnet, dass** genannter Ringkranz (56) auf die gesamte externe Oberfläche des Körpers des genannten Einschlusselements (51) aufgepresst ist.

4. Elektropumpe nach Anspruch 1 oder 2, **dadurch gekennzeichnet, dass** die genannte erste Arbeitsseite (57, 87) des genannten Ringkranzes (56, 86) eine Einfassung (57a, 87a) aufweist, die im Betrieb eine entsprechende kreisförmige Einfassung (21 a) der genannten internen Oberfläche der genannten Buchse (2) aufnehmen kann.

5. Elektropumpe nach Anspruch 1, **dadurch gekennzeichnet, dass** der Körper des genannten Einschlusselements (51) eine Hülse (54) formt, die einen Durchgangskanal (55) für die elektrische Anschlussverkabelung an die genannte Motorgruppe (3) bildet, dieser Durchgangskanal (55) ist ausreichend geharzt, um das Eindringen der genannten Flüssigkeit von außen ins Innere des genannten Aufnahmeraums (5) zu verhindern.

6. Elektropumpe nach Anspruch 1, **dadurch gekennzeichnet, dass** das genannte Einschlusselement (56) einen axialen Anhang (59) mit Gewinde formt, der mit genanntem Klemmelement (52) verbunden ist.

7. Elektropumpe nach Anspruch 1, **dadurch gekennzeichnet, dass** das genannte Einschlusselement (56) eine Zugangsbohrung (68) vorsieht, die im Betrieb mit Schrauben (69) geschlossen ist und durch die im Aufnahmeraum (5) Dichtheitsprüfungen erfolgen können.

8. Elektropumpe nach Anspruch 1 oder 2, **dadurch gekennzeichnet, dass** das genannte Einschlusselement (56) ein flexibles Gehäuse (70) aufweist, in Form einer Kappe angebracht, deren Seite zum Motorelement (30) zeigt und auf integrierte Weise mit dem genannten Ringkranz (56) so realisiert ist, dass es innen in genannten Aufnahmeraum (5) kragt und innen eine Ausgleichkammer (71) definiert, die die genannte, von außen kommende Flüssigkeit auffängt, um ein statisches Gleichgewicht zwischen einer innerhalb des genannten Aufnahmeraums (5) vorhandenen Flüssigkeit und der genannten äußeren Flüssigkeit zu bilden.

9. Elektropumpe nach Anspruch 1, **dadurch gekennzeichnet, dass** das genannter Ringkranz (86) des Einschlusselements (81) eine Reihe von Längseinschnitten (89) aufweist, die winkelförmig verteilt sind, und diesen Ringabschnitt (86) in eine Reihe von Segmenten unterteilen können, genannte Einschnitte (89) des genannten Ringabschnitts (86) können von jeweiligen länglichen Lamellen (104) dieses Klemmelements (82) umfasst werden.

10. Elektropumpe nach einem oder mehreren der vorhergehenden Ansprüche, **dadurch gekennzeichnet, dass** das genannte Einschlusselement (81) außen eine ringförmige Hervorhebung (85) aufweist, die als Sperre für die axiale Positionierung dient, und bei der zwischen genannter ringförmiger Hervorhebung (85) und genannten Ringabschnitt (86) wenigstens ein ringförmiger Sitz (90) für die Aufnahme eines entsprechenden O-Rings (91) ausgebildet ist.

11. Elektropumpe nach Anspruch 1, **dadurch gekennzeichnet, dass** das genannte Klemmelement (52, 82) ein ringförmiges Teil (60, 100) stumpfkegliger Art umfasst, das extern eine Arbeitsoberfläche (63, 103) formt, die hauptsächlich mit der Oberfläche verbunden ist, die durch genannte zweite Arbeitsseite (58, 88) des genannten Ringkranzes (56, 86) des Einschlusselements (51, 81) geformt ist.

12. Elektropumpe nach Anspruch 11, **dadurch gekennzeichnet, dass** das genanntes Klemmelement (52, 82) ein zentrales Teil (61, 101) umfasst, das mit diesem ringförmigen Teil (60, 100) durch eine Reihe radialer Rippen (62, 102) verbunden ist, und eine axiale Bohrung (65, 101) besitzt, um durchführend ein Teil (59, 106) mit Gewinde aufzunehmen, das mit genanntem Einschlusselement (51, 82) vereint ist.

13. Elektropumpe nach Anspruch 11, **dadurch gekennzeichnet, dass** das genannte Klemmelement (52) bei Betrieb an genanntes Einschlusselement (51) mit Mitteln zur Abschraubsicherung (64) bestehend aus einer Mutter auf genanntem Teil (59) mit Gewinde des genannten Einschlusselements (51) angeschlossen ist.

14. Elektropumpe nach Anspruch 9 und 12, **dadurch gekennzeichnet, dass** sie ein schlauchförmiges Steuerelement (83) umfasst, das in Betrieb an genanntem Einschlusselement (81) angeschlossen ist und an genanntes Teil (106) mit Gewinde des genannten zentralen Teils (101) mit einem Gewindekopf (106) verbunden ist, um durch die axiale Drehung desselben Steuerelements (83) und infolge des genannten Einsatzes der genannten Einschnitte (89) des Ringkranzes (86) in genannte Lamellen (104) des Klemmelements (82) eine axiale Versetzung des genannten Klemmelements (82) bewirkt, die die genannte radiale Expansion des genannten Ringkranzes (86) des Einschlusselements (81) gegen die genannte interne Oberfläche der Buchse (2) erzeugt.

15. Elektropumpe nach Anspruch 14, **dadurch gekennzeichnet, dass** in Übereinstimmung mit dem Ende, das dem genannten Gewindekopf (106) gegenüberliegt, das genannte Steuerelement (83) eine Reihe von Steuerrippen (107) bildet, die winkelförmig um die Achse des Steuerelements (83) selbst verteilt sind, und zur An- und Abmontage der genannten Verschlussmittel (80) bestimmt sind.

16. Elektropumpe nach Anspruch 14, **dadurch gekennzeichnet, dass** in Übereinstimmung eines hauptsächlich mittigen Teils genanntes Steuerelement (83) extern einen Ring (105) zur interne Anlaufscheibe (92) in genanntem Einschlusselement (81) formt.

17. Elektropumpe nach Anspruch 14, **dadurch gekennzeichnet, dass** dieses Steuerelement (83) aus metallenem Material hoher Wärmeleitfähigkeit besteht.

## Revendications

1. Pompe électrique centrifuge du type comprenant
un boîtier externe en forme de tube (2) qui comporte au moins une ouverture d'aspiration (25) et une ouverture de refoulement (27) ;
une unité de pompage (4) insérée axialement dans ledit boîtier (2) pour aspirer un liquide à travers ladite ouverture d'aspiration (25) et transférer ledit flux de liquide à travers ladite ouverture de refoulement (27) ;
une unité moteur (3) insérée axialement dans ledit boîtier (2) et adaptée pour être fonctionnellement connectée à ladite unité de pompage (4) ;
des moyens de fermeture (50, 80) adaptés pour isoler un compartiment de logement (5) de ladite unité moteur (3) par rapport au liquide alimenté par ladite unité de pompage (4) et au liquide présent à l'extérieur dudit boîtier (2) ; lesdits moyens de fermeture (50, 80) comprenant
un élément d'occlusion (51, 81) pourvu d'au moins une portion de matériau élastique (56, 86) adaptée pour s'engager circonférentiellement avec la surface interne dudit boîtier (2) ; et
un élément de fixation (52, 82) adapté pour être associé audit élément d'occlusion (51, 81) pour mettre en oeuvre l'expansion radiale de ladite portion de matériau élastique (56, 86), de manière à fixer la même portion de matériau élastique (56, 86) contre ladite surface interne dudit boîtier (2),
ladite portion élastique (56, 86) comprenant une bague annulaire ayant un premier côté fonctionnel (57, 87), agencé - en service - de manière adjacente à ladite surface interne dudit boîtier (2), et un deuxième côté fonctionnel opposé (58, 88), adapté pour s'engager avec ledit élément de fixation (52, 82),
**caractérisée en ce que**
ladite bague annulaire (56) est constituée d'un matériau élastique sous forme d'une pièce séparée supportée sur sa périphérie par le corps dudit élément d'occlusion (51), et **en ce que** ledit corps dudit élément d'occlusion (51) est constitué d'un matériau plastique d'un type différent, présentant une rigidité supérieure à celle de ladite bague annulaire (56).

2. Pompe électrique selon la revendication 1, **caractérisée en ce que** ledit deuxième côté fonctionnel (58, 88) comporte une surface de butée sensiblement tronconique, de telle sorte que la section transversale de ladite bague annulaire (56, 86) augmente à partir de l'extrémité libre.

3. Pompe électrique selon la revendication 1 ou 2, **caractérisée en ce que** ladite bague annulaire (56) est surmoulée sur toute la surface externe du corps dudit élément d'occlusion (51).

4. Pompe électrique selon la revendication 1 ou 2, **caractérisée en ce que** ledit premier côté fonctionnel (57, 87) de ladite bague annulaire (56, 86) présente un plissement (57a, 87a) adapté pour s'engager, en service, avec un plissement circonférentiel correspondant (21 a) de ladite surface interne dudit boîtier (2).

5. Pompe électrique selon la revendication 1, **caractérisée en ce que** ledit corps dudit élément d'occlusion (51) configure un tube (54) qui définit un tuyau de passage (55) pour le câblage électrique destiné à la connexion de ladite unité moteur (3), ledit tuyau (55) comportant un revêtement de résine adapté de manière à éviter l'entrée dudit liquide depuis l'extérieur dans ledit compartiment (5).

6. Pompe électrique selon la revendication 1, **caractérisée en ce que** ledit élément d'occlusion (56) configure un accessoire fileté axial (59) adapté pour être couplé audit élément de fixation (52).

7. Pompe électrique selon la revendication 1, **caractérisée en ce que** ledit élément d'occlusion (56) est pourvu d'un trou d'accès (68) fermé, en service, par un moyen à vis (69), et adapté pour permettre des essais d'étanchéité à l'intérieur dudit compartiment (5).

8. Pompe électrique selon la revendication 1 ou 2, **caractérisée en ce que** ledit élément d'occlusion (56) comporte une coque flexible (70) appliquée comme un capot sur le coté faisant face audit élément moteur (30) et intégrée avec ladite bague annulaire (56), de manière à se projeter vers l'intérieur dudit compartiment (5) et à définir à l'intérieur une chambre de compensation (71) adaptée pour recevoir ledit liquide provenant de l'extérieur afin d'obtenir un équilibre statique entre un fluide présent à l'intérieur dudit compartiment (5) et ledit liquide présent à l'extérieur.

9. Pompe électrique selon la revendication 1, **caractérisée en ce que** ladite bague annulaire (86) de l'élément d'occlusion (81) comporte une série d'encoches longitudinales (89), distribuées de manière angulaire, adaptées pour partitionner la même section annulaire (86) en une série de secteurs, lesdites encoches (89) de ladite section annulaire (87) étant adaptées pour s'engager avec des ailettes longitudinales respectives (104) dudit élément de fixation (82).

10. Pompe électrique selon une ou plusieurs des revendications précédentes, **caractérisée en ce que** l'élément d'occlusion (81) comporte de manière externe une projection annulaire (85) destinée à servir d'élément d'arrêt pour le positionnement axial, et **en ce que**, entre ladite projection annulaire (85) et ladite section annulaire (86), il existe au moins une gorge annulaire (90) pour y loger un anneau d'étanchéité respectif (91).

11. Pompe électrique selon la revendication 1, **caractérisée en ce que** ledit élément de fixation (52, 82) comprend une portion annulaire de forme tronconique (60, 100) de manière à définir de façon externe une surface fonctionnelle (63, 103) essentiellement jointe à la surface définie par ledit deuxième côté fonctionnel (58, 88) de ladite bague annulaire (56, 86) de l'élément d'occlusion (51, 81).

12. Pompe électrique selon la revendication 11, **caractérisée en ce que** ledit élément de fixation (52, 82) comprend une portion centrale (61, 101) connectée à ladite portion annulaire (60, 100) à l'aide d'une série de nervures radiales (62, 102) et comportant un trou axial (65, 101) adapté pour recevoir - en le traversant - une portion filetée (59, 106) associée audit élément d'occlusion (51, 82).

13. Pompe électrique selon la revendication 11, **caractérisée en ce que** ledit élément de fixation (52) est fixé, en service, contre ledit élément d'occlusion (51) à l'aide d'un moyen anti-dévissage (64) constitué d'un écrou couplé à ladite portion filetée (59) dudit élément d'occlusion (51).

14. Pompe électrique selon les revendications 9 et 12, **caractérisée en ce qu**'elle comprend un élément de manoeuvre tubulaire (83) associé, en service, audit élément d'occlusion (81), et couplé à ladite portion filetée (106) de ladite portion centrale (101) à l'aide d'une tête filetée (106) pour permettre, grâce à une rotation axiale dudit élément de manoeuvre (83) et du fait dudit engagement desdites encoches (89) de la bague annulaire (86) dans lesdites ailettes (104) de l'élément de fixation (82), un mouvement axial dudit élément de fixation (82) de manière à générer ladite expansion radiale de ladite bague annulaire (86) de l'élément d'occlusion (81) contre ladite surface interne dudit boîtier (2).

15. Pompe électrique selon la revendication 14, **caractérisée en ce qu**'à l'extrémité opposée à ladite tête filetée (106), ledit élément de manoeuvre (83) configure une série de nervures de manoeuvre (107) distribuées angulairement autour de l'axe de l'élément de manoeuvre (83) lui-même, destinées à permettre le montage et le démontage dudit élément de scellage (80).

16. Pompe électrique selon la revendication 14, **caractérisée en ce qu**'à une portion essentiellement médiane, ledit élément de manoeuvre (83) forme extérieurement un collet (105) adapté pour venir à butée contre un épaulement annulaire interne (92) dudit élément d'occlusion (81).

17. Pompe électrique selon la revendication 14, **caractérisée en ce que** ledit élément de manoeuvre (83) est constitué en un matériau métallique à haute conductivité thermique.
